# FASCICULE DE BREVET EUROPEEN

(11) **EP 4 229 284 B1**
(45) Date de publication et mention de la délivrance du brevet: **03.09.2025**
(21) Numéro de dépôt: 21798080.4
(22) Date de dépôt: 28.09.2021
(51) Int. Cl.: F02B 19/02, F02B 19/10, F02B 19/12, F02B 19/18, F02M 51/06, F02M 57/06, F02P 13/00

(54) **PRÉCHAMBRE D'ALLUMAGE À CLAPET À TÉTON DE GUIDAGE**
ZÜNDVORKAMMER MIT VENTIL MIT FÜHRUNGSSTIFT
IGNITION PRECHAMBER WITH VALVE HAVING A GUIDE PIN

(30) Priorité: 16.10.2020 FR 2010667
(43) Date de publication de la demande: 23.08.2023
(73) Titulaire: Rabhi, Vianney, 69006 Lyon (FR)
(72) Inventeur: Rabhi, Vianney, 69006 Lyon (FR)
(74) Mandataire: Vuillermoz, Bruno
(86) Numéro de dépôt international: PCT/FR2021/051669
(87) Numéro de publication internationale: WO 2022/079367

(56) Documents cités:
- FR-A1- 3 060 222
- FR-A1- 3 061 743
- FR-A1- 3 085 718
- US-A- 3 710 764

## Description

La présente invention a pour objet une préchambre à clapet à téton de guidage qui forme un perfectionnement de la préchambre d'allumage à clapet objet du brevet N° FR 3 061 743 publié le 16 août 2019 et appartenant au demandeur.

Le clapet à téton de guidage suivant la présente invention est compatible avec les principaux perfectionnements de la préchambre d'allumage à clapet selon le brevet FR 3 061 743, lesdits perfectionnements ayant fait l'objet de plusieurs demandes de brevets.

Parmi lesdits perfectionnements, on note le « dispositif de rappel magnétique de clapet » objet de la demande de brevet français N° 3 085 718 publiée le 13 mars 2020, ou « l'insert d'allumage à préchambre active » dont la demande de brevet français a été déposée le 13 mai 2019 sous le N° 1904961, ou encore la « préchambre d'allumage à clapet à sens de combustion inversé » qui a fait l'objet de la demande de brevet français N° 2001508 du 14 février 2020.

Tous ces brevets et demandes de brevet ont en commun de présenter - tout comme le font la plupart des dispositifs d'allumage à torches selon l'état de l'art - une préchambre d'allumage formée d'une cavité de stratification aménagée dans la culasse d'un moteur à combustion interne.

La stratégie que servent lesdits brevets, demandes de brevets, et dispositifs, est notamment connue sous le terme anglo-saxon de « Turbulent Jet Ignition ».

Selon lesdits brevets et demandes de brevets, la cavité de stratification est d'une part, reliée à la chambre de combustion du moteur à combustion interne par un conduit de stratification, et d'autre part, reçoit un injecteur de stratification qui peut injecter dans ladite cavité une charge pilote préalablement mise sous pression par des moyens de compression, ladite charge étant constituée d'un mélange comburant-carburant facilement inflammable au moyen d'une étincelle.

On note que la chambre de combustion reçoit quant à elle une charge principale qui peut être non-diluée, ou diluée soit avec de l'air ou avec des gaz d'échappement recirculés, la dilution permettant notamment de maximiser le rendement énergétique du moteur à combustion interne.

Lesdits brevets et demandes de brevets appartenant au demandeur se distinguent de l'état de l'art antérieur en ce que le conduit de stratification expose un siège d'obturation de clapet sur lequel peut reposer un clapet de stratification pour fermer ledit conduit. Ce faisant, ledit clapet isole la cavitè de stratification de la chambre de combustion du moteur à combustion interne.

Lorsqu'en revanche ledit clapet est éloigné dudit siège pour reposer sur une butée de clapet côté chambre directement ou par l'intermédiaìre d'une chambre d'amortissement comme exposé dans la demande de brevet français 3 085 718, ledit clapet forme avec le conduit de stratification une préchambre d'allumage par torche qui communique simultanément d'une part, avec la cavité de stratification, et d'autre part, avec la chambre de combustion par l'intermédiaire d'orifices d'éjection des gaz.

Cette configuration particulière permet de constituer dans la cavité de stratification une charge pilote parfaitement inflammable quelles que soient la nature et la composition de la charge principale.

En effet, la composition, la pression et la température de la charge pilote peuvent être radicalement différentes de celles de la charge principale.

Ceci permet d'éviter l'un des principaux écueils des préchambres d'allumage par torches « ouvertes » - c'est à dire sans clapet de stratification - qui, selon l'état de l'art, impliquent que si un mélange gazeux difficile à enflammer forme la charge principale, ledit mélange forme aussi - pour partie et par mélange inopportun - la charge pilote dans la préchambre d'allumage.

Ainsi, la charge pilote est d'autant moins capable de délivrer une forte puissance d'allumage que la mise à feu de la charge principale nécessite une forte puissance d'allumage.

A l'inverse, quand la charge principale est formée d'un mélange peu dilué et très réactif qui nécessite une faible puissance d'allumage pour éviter que la combustion de ladite charge ne génère des gradients de pression trop élevés et du bruit dans la chambre principale, la charge pilote est trop énergétique car elle est en partie formée du mélange constitutif de la charge principale.

En d'autres termes, sans le clapet de stratification permettant de fermer le conduit de stratification, la charge pilote se retrouve nécessairement formée pour partie du mélange constituant la charge principale. Dans ces conditions, la charge pilote hérite pour partie de la susceptibilité à l'allumage et à la combustion de la charge principale, ce qui est contraire au besoin.

En effet, moins la charge principale est réactive, plus la charge pilote doit être puissante. A l'inverse, plus la charge principale est brûlable facilement et rapidement, moins la charge pilote doit être énergétique pour éviter une combustion trop rapide de ladite charge principale.

C'est pourquoi la préchambre d'allumage à clapet du brevet FR 3 061 743 forme un dispositif d'allumage par torches autonome dont il est possible de régler librement la puissance, ceci pour trouver le meilleur compromis entre le rendement, les émissions polluantes et les émissions acoustiques du moteur à combustion interne qui la reçoit.

Ceci étant exposé, on peut constater sur les figures qu'expose le brevet FR 3 061 743 et ses différents perfectionnements que le clapet de stratification doit présenter une épaisseur suffisante pour ne pas se fissurer malgré les chocs qu'il subit en entrant régulièrement au contact de son siège d'obturation de clapet.

Pour éviter que ledit clapet ne se coince dans le conduit de stratification dans lequel il est logé, soit ledit clapet doit être très épais au détriment de son poids devenant excessif, soit ledit clapet doit présenter un pourtour troncosphérique et non pas cylindrique, ceci afin de prévenir le coincement dudit clapet dans son logement quelle que soit son orientation par rapport au conduit de stratification.

L'inconvénient d'un clapet à profil troncosphérique tel que montré dans la demande de brevet français N° 1904961 est que ledit clapet peut - quand il s'ouvre sous l'effet de la pression des gaz pour ouvrir le conduit de stratification - basculer par rapport au conduit de stratification qui l'héberge, et ne plus rester parallèle au siège d'obturation de clapet avec lequel il coopère.

Le basculement du clapet de stratification est d'autant plus important si ledit clapet est rappelé sur son siège d'obturation de clapet par un champ magnétique comme l'expose la demande de brevet français 3 085 718.

En effet, lorsque dans ce contexte particulier ledit clapet est rappelé par un champ magnétique, le décollement dudit clapet du siège d'obturation de clapet avec lequel il coopère s'opère en deux temps.

Dans un premier temps, sous la pression des gaz, ledit clapet se décolle d'un côté seulement car il ne s'agit pour ladite pression que de surpasser le couple qu'exerce le champ magnétique sur ledit clapet. L'effort que nécessite ledit décollement est de faible intensité.

Dans un deuxième temps, le clapet de stratification étant déjà basculé, la pression des gaz doit contrer l'effort d'attraction au collage qu'exerce le champ magnétique sur ledit clapet, ceci pour que ce dernier se sépare totalement du siège d'obturation de clapet tout en adoptant une attitude plus parallèle à ce dernier. L'effort que nécessite ce deuxième décollement est de plusieurs fois supérieur à celui nécessaire au premier décollement.

Comme on le comprend de ce qui précède, si le clapet de stratification est rappelé sur son siège d'obturation de clapet par un champ magnétique comme le propose la demande de brevet français 3 085 718 - ce qui est pratiquement indispensable - et dans la mesure où ledit clapet présente un pourtour troncosphérique pour éviter qu'il ne se coince dans son logement, ledit clapet ne peut que basculer selon un angle important.

Ce basculement présente comme premier inconvénient de ne pas découvrir tous les orifices d'éjection des gaz simultanément et de la même façon, c'est dire autant les uns que les autres.

Il résulte de ceci que, d'une part, les torches d'allumage constituées de gaz chauds ne sont pas émises au même moment dans la chambre principale via la préchambre d'allumage par torche, et que, d'autre part, lesdites torches ne présentent pas toutes la même propension à allumer la charge principale tant en puissance thermique et aérodynamique, qu'en réactivité physicochimique.

Cette double inhomogénéité comportementale des torches les unes par rapport aux autres nuit gravement à l'homogénéité de la combustion de la charge principale dans la chambre principale.

Ladite inhomogénéité peut produire du cliquetis, c'est-à-dire une combustion anormale de la charge principale pouvant endommager le moteur à combustion interne. En outre, ladite inhomogénéité produit inévitablement de la dispersion cyclique avec des combustions de charge principale lentes qui succèdent à des combustions rapides de ladite charge, et inversement.

Ladite dispersion cyclique nuit au rendement énergétique et au comportement vibro-acoustique dudit moteur.

Le basculement intempestif du clapet de stratification dont il est ici question n'opère pas seulement à l'ouverture dudit clapet, mais aussi à sa fermeture, lorsque ledit clapet vient reposer à nouveau sur le siège d'obturation de clapet avec lequel il coopère.

Il résulte de ce dernier basculement des dispersions temporelles de fermeture du clapet de stratification d'une part, et des défauts d'étanchéité entre ledit clapet et le siège d'obturation de clapet d'autre part, lesdits défauts se manifestant par le passage indésirable de gaz depuis la chambre principale vers la cavité de stratification.

Ledit passage peut conduire à d'importantes variations d'initiation et de développement de la combustion de la charge pilote dans la cavité de stratification d'un cycle à un autre, ceci parce que ladite charge pilote comprend - d'un cycle à l'autre - plus ou moins de gaz en provenance de la charge principale.

lesdites variations de combustion conduisent à des émissions de torches dans la chambre principale plus ou moins précoces, plus où moins puissantes, plus ou moins chaudes, et plus ou moins réactives d'un cycle à un autre. Ceci conduit à rendre instable la combustion de la charge principale d'un cycle à un autre, là aussi au détriment du rendement énergétique et du comportement vibro-acoustique du moteur à combustion interne.

Une autre conséquence fâcheuse du comportement erratique du clapet en orientation et en étanchéité est une température d'équilibre dudit clapet élevée. En effet, ledit clapet reposant mal sur le siège d'obturation de clapet avec lequel il coopère, ledit clapet se refroidit également mal au contact dudit siège.

Il résulte de ceci qu'en fonctionnement, le clapet de stratification peut atteindre des températures excessives qui peuvent conduire - par dilatation thermique - au coincement dudit clapet dans le conduit de stratification dans lequel il est logé.

C'est notamment pour résoudre ces divers problèmes comportementaux du clapet de stratification de la préchambre d'allumage à clapet selon le brevet FR 3 061 743 que le clapet à téton de guidage selon l'invention se substitue avantageusement au clapet de stratification tel que décrit dans ledit brevet et ses perfectionnements, ledit clapet à téton étant maintenu approximativement parallèle - durant toute sa course de déplacement dans le conduit de stratification - au siège d'obturation de clapet avec lequel il coopère.

En soi, une préchambre de combustion munie d'un clapet à téton de guidage est déjà connue, par exemple du document US 3710764 A. Cette préchambre ne comporte aucun injecteur de stratification.

Il résulte notamment de la préchambre d'allumage à clapet à téton de guidage selon l'invention que :
- Toutes les torches d'allumage sont émises par la préchambre d'allumage par torche approximativement simultanément et à même puissance ;
- La puissance, la composition, le comportement aérodynamique et la réactivité physicochimique des torches émises dans la chambre de combustion du moteur à combustion interne par la préchambre d'allumage par torche sont maitrisés, et similaires d'une torche à une autre ;
- La sécurité et le rendement énergétique du moteur à combustion interne sont maximisés ;
- Le comportement vibro-acoustique dudit moteur est optimisé ;
- Le refroidissement dudit clapet est correctement assuré en toutes circonstances, y-compris lorsque le moteur à combustion interne opère à puissance élevée.

En outre, en se substituant au clapet de stratification, le clapet á téton de guidage selon l'invention augmente avantageusement la pérennité et la robustesse de la préchambre d'allumage à clapet selon le brevet FR 3 061 743 dans son ensemble, ceci en prévenant tout risque de coincement mécanique dudit clapet à tèton dans le conduit de stratification qui l'héberge, et en limitant l'usure abrasive dudit clapet et dudit conduit.

De plus, la préchambre d'allumage à clapet à téton de guidage selon l'invention tire un meilleur parti et optimise le fonctionnement de la chambre d'amortissement décrite dans la demande de brevet français N° 3 085 718.

La présente invention propose une préchambre d'allumage à clapet configurée pour être aménagée dans une culasse de moteur à combustion interne qui coiffe une chambre de combustion, ladite préchambre comprenant une cavité de stratification dans laquelle débouchent des moyens d'allumage et au moins un injecteur de stratification, ladite cavité étant configurée pour être reliée à la chambre de combustion par un conduit de stratification qui héberge un clapet orienté pour pouvoir former avec ce dernier une préchambre d'allumage par torche qui met la cavité de stratification en relation avec la chambre de combustion par l'intermédiaire d'au moins un orifice d'éjection des gaz, le clapet orienté comprenant :
- Un corps principal de clapet logé à faible jeu dans le conduit de stratification :
- Une face axiale d'obturation aménagée sur le corps principal de clapet et qui peut en tout ou partie reposer sur un siège d'obturation de conduit que présente le conduit de stratification afin d'obturer ledit conduit et d'isoler la cavité de stratification de la chambre de combustion ;
- Au moins une surface périphérique de centrage aménagée en périphérie du corps principal de clapet, ladite surface pouvant entrer au contact de la paroi interne du conduit de stratification pour centrer ledit corps dans ledit conduit ;
- Une face axiale d'ouverture qui est aménagée sur le corps principal de clapet à l'opposé de la face axiale d'obturation et qui, lorsque la face axiale d'obturation ne repose pas sur le siège d'obturation de conduit, peut reposer sur une butée de clapet côté chambre aménagée dans le conduit de stratification ;
- Au moins un téton d'orientation qui est fixement solidaire du corps principal de clapet et qui émerge de la face axiale d'ouverture ;
- Au moins un orifice axial de guidage qui est aménagé dans ou à proximité de la butée de clapet côté chambre et dans lequel est logé le téton d'orientation à faible jeu radial, ledit téton pouvant coulisser longitudinalement dans ledit orifice sans jamais entièrement en sortir ;
- Et une chambre d'amortissement de clapet formée par le conduit de stratification, la face axiale d'ouverture et la butée de clapet côté chambre et dont le volume est maximal lorsque la face axiale d'obturation repose sur le siège d'obturation de conduit, et minimal lorsque la face axiale d'ouverture repose sur la butée de clapet côté chambre.

Selon un mode de réalisation de l'invention, l' orifice axial de guidage traverse de part en part le conduit de stratification de sorte à relier la chambre d'amortissement de clapet et la chambre de combustion, ceci afin qu'un gaz puisse circuler entre lesdites chambres, via le faible jeu radial laissé entre le téton d'orientation et l'orifice axial de guidage.

Selon un mode de réalisation de l'invention, au moins un orifice d'étranglement des gaz relie la chambre d'amortissement de clapet et la chambre de combustion de sorte qu'un gaz peut circuler entre lesdites chambres, via ledit orifice.

Selon un mode de réalisation de l'invention, la surface périphérique de centrage présente un profil conique.

Selon un mode de réalisation de l'invention, l' orifice d'éjection des gaz est relié à la préchambre d'allumage par torche par l'intermédiaire d'au moins un créneau d'éjection des gaz aménagé dans le conduit de stratification et au voisinage du siège d'obturation de conduit.

Selon un mode de réalisation de l'invention, le corps principal de clapet et/ou le téton d'orientation est attiré en direction de la cavité de stratification par une source de champ magnétique de fermeture.

Selon un mode de réalisation de l'invention, ladite source de champ magnétique de fermeture est constituée d'au moins un aimant permanent de fermeture qui produit un champ magnétique, ce dernier pouvant être soit contré, soit amplifié par un champ magnétique respectivement contraire ou concordant induit dans un noyau de bobine de pilotage par une bobine de pilotage de champ magnétique.

Selon un mode de réalisation de l'invention, le corps principal de clapet et/ou le téton d'orientation est attiré en direction de la butée de clapet côté chambre par une source de champ magnétique d'ouverture.

Selon un mode de réalisation de l'invention, le téton d'orientation comporte un épaulement d'amortissement qui coopère avec un lamage d'amortissement aménagé en entrée de l'orifice axial de guidage, ledit lamage débouchant dans la chambre d'amortissement de clapet.

Selon un mode de réalisation de l'invention, ledit lamage d'amortissement est directement ou indirectement relié à la chambre de combustion par au moins un conduit de dépressurisation.

Selon un mode de réalisation de l'invention, le conduit de stratification comprend un manchon rapporté amagnétique sur lequel est aménagé le siège d'obturation de conduit.

La description qui va suivre en regard des dessins annexés et donnés à titre d'exemples non limitatifs permettra de mieux comprendre l'invention, les caractéristiques qu'elle présente, et les avantages qu'elle est susceptible de procurer :

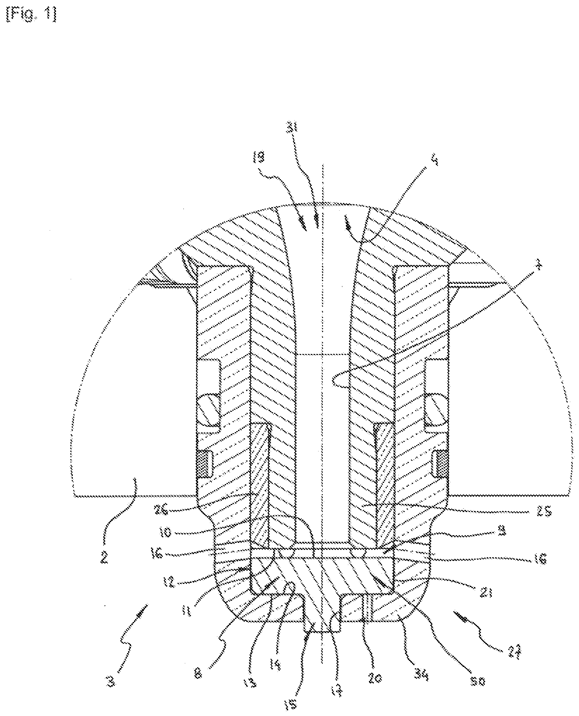

[Fig. 1] est une vue en coupe schématique rapprochée de la préchambre d'allumage à clapet á téton de guidage suivant l'invention, ledit clapet étant en position « ouverte » dans le conduit de stratification de sorte que la face axiale d'ouverture repose sur la butée de clapet côté chambre cependant que ledit clapet forme avec le conduit de stratification une préchambre d'allumage par torche qui met la cavité de stratification en relation avec la chambre de combustion par l'intermédiaire d'orifices d'éjection des gaz.

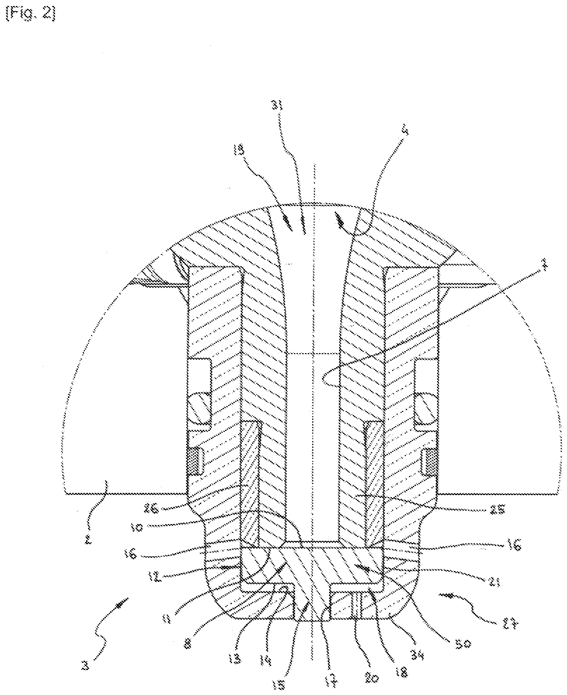

[Fig. 2] est une vue en coupe schématique rapprochée de la préchambre d'allumage à clapet á téton de guidage suivant l'invention et selon la variante illustrée en figure 1, ledit clapet étant en position « fermée » dans le conduit de stratification de sorte que la face axiale d'obturation dudit clapet repose sur le siège d'obturation de conduit et que la cavité de stratification ne communique plus avec la chambre de combustion.

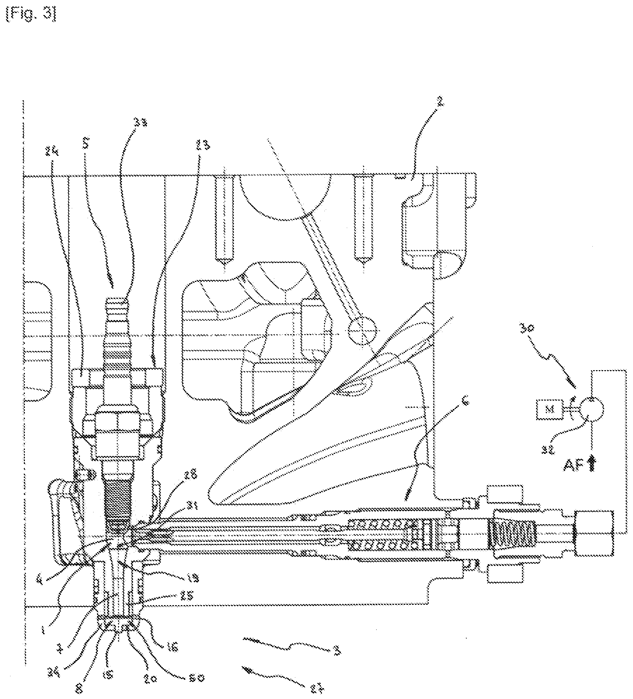

[Fig. 3] est une vue en coupe schématique de la culasse de moteur à combustion interne telle qu'elle peut être prévue pour recevoir la préchambre d'allumage à clapet à téton de guidage suivant l'invention par l'intermédiaire d'un insert d'allumage à préchambre active tel que décrit dans la demande de brevet français N° 1904961, ledit clapet étant rappelé en fermeture par le dispositif de rappel magnétique de clapet objet de la demande de brevet français N° 3 085 718 cependant que l'injecteur de stratification qui débouche dans la cavité de stratification fait partie du système d'injection hydraulique à came ayant fait l'objet de la demande de brevet français N° 1913528 du 29 novembre 2019, ceci tandis que la cavité de stratification reçoit une enceinte d'inverseur telle que prévue dans la demande de brevet français N° 20 01508 intitulée « préchambre d'allumage à clapet à sens de combustion inversé ».

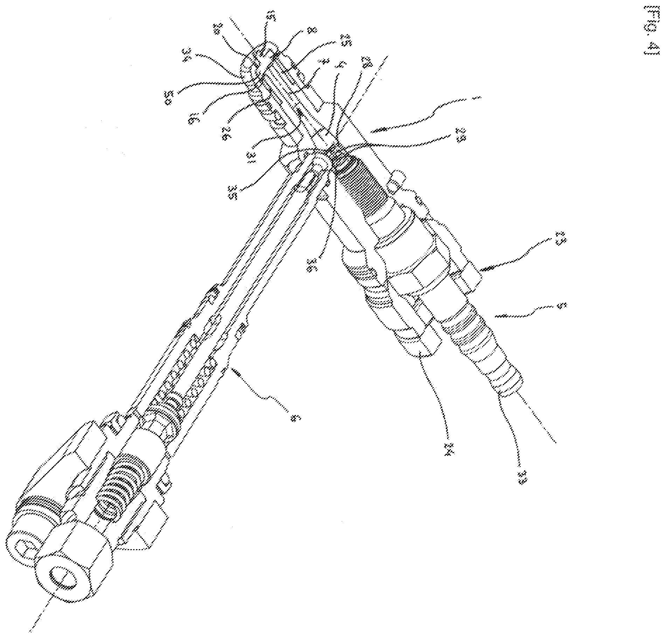

[Fig. 4] est une vue tridimensionnelle en coupe de la préchambre d'allumage à clapet à téton de guidage suivant l'invention et selon la variante et l'environnement montrés en figure 3, mais sans la culasse de moteur à combustion interne.

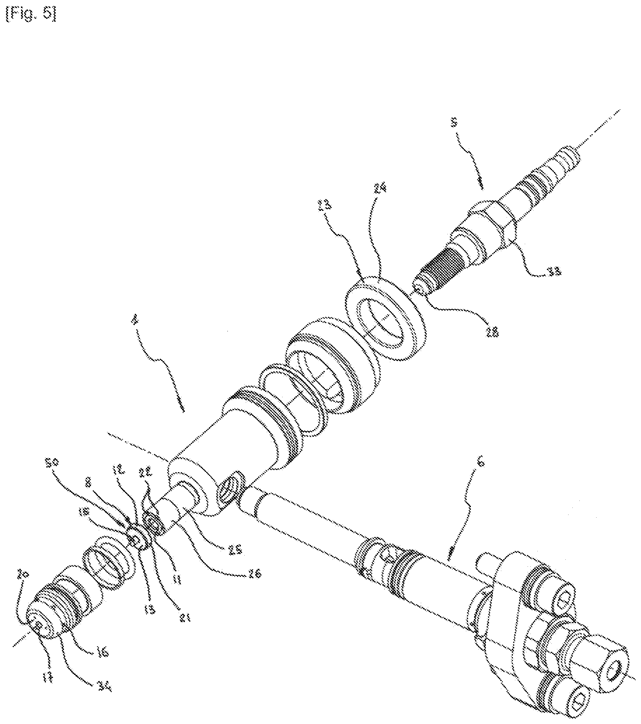

[Fig. 5] est une vue tridimensionnelle éclatée de la préchambre d'allumage à clapet à téton de guidage suivant l'invention et selon la variante et l'environnement montrés en figure 3, mais sans la culasse de moteur à combustion interne.

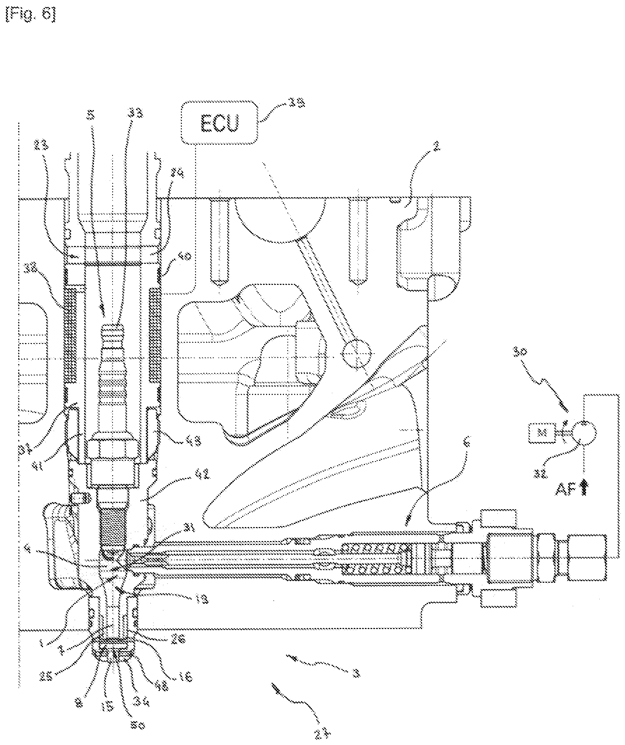

[Fig. 6] est une vue en coupe schématique de la culasse de moteur à combustion interne telle qu'elle peut être prévue pour recevoir la préchambre d'allumage à clapet à téton de guidage suivant l'invention par l'intermédiaire d'un insert d'allumage à préchambre active tel que décrit dans la demande de brevet français N° 1904961, ledit clapet étant rappelé en fermeture par un champ magnétique produit par un aimant permanent de fermeture, ledit champ pouvant être contré ou amplifié par un champ magnétique respectivement contraire ou concordant induit dans un noyau de bobine de pilotage par une bobine de pilotage de champ magnétique.

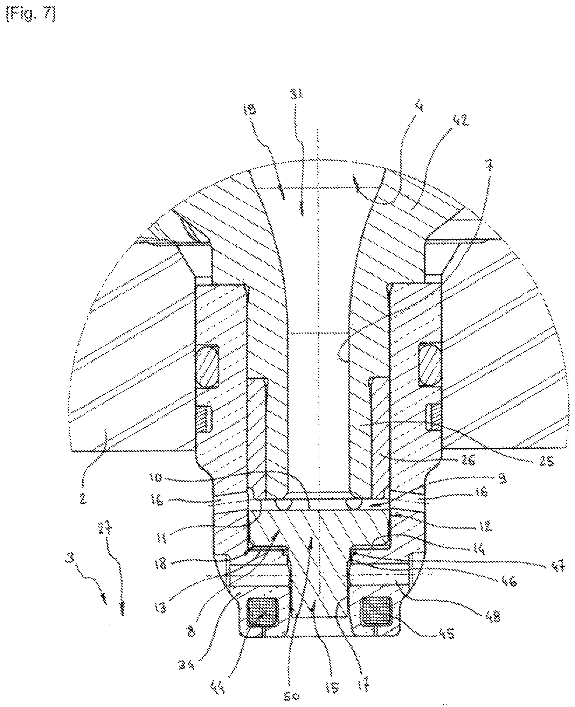

[Fig. 7] est une vue en coupe schématique rapprochée d'une variante de la préchambre d'allumage à clapet à téton de guidage suivant l'invention selon laquelle ledit clapet reçoit un épaulement d'amortissement qui coopère avec un lamage d'amortissement aménagé en entrée de l'orifice axial de guidage, cependant que le corps principal de clapet est attiré en direction de la butée de clapet côté chambre par un aimant permanent d'ouverture annulaire solidaire d'un nez de préchambre amagnétique, ledit clapet étant en position « ouverte » de sorte à former avec le conduit de stratification une préchambre d'allumage par torche.

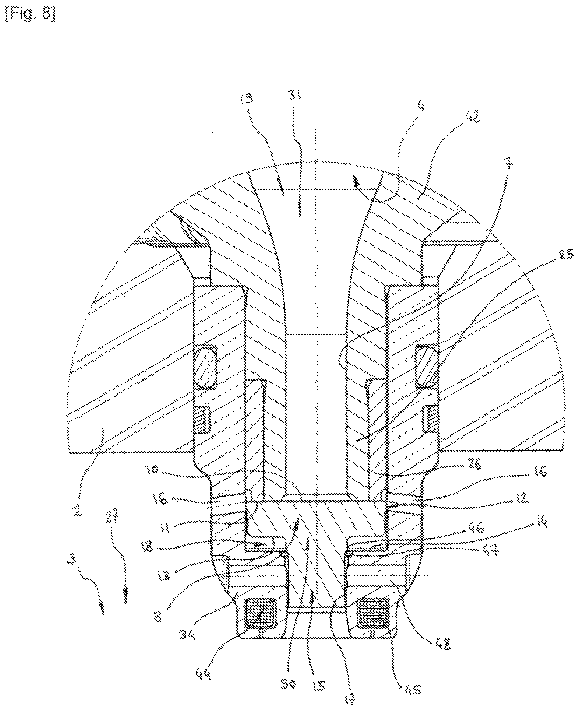

[Fig. 8] est une vue en coupe schématique rapprochée de la préchambre d'allumage à clapet à téton de guidage suivant l'invention et selon la variante montrée en figure 7, ledit clapet étant en position « fermée » dans le conduit de stratification de sorte que la face axiale d'obturation dudit clapet repose sur le siège d'obturation de conduit et que la cavité de stratification ne communique plus avec la chambre de combustion.

### DESCRIPTION DE L'INVENTION :

On a montré en figures 1 à 8 la préchambre d'allumage à clapet à téton de guidage 50 suivant l'invention, divers détails de ses composants, ses variantes, et ses accessoires.

Comme le montrent les figures 3 à 6, la préchambre d'allumage à clapet suivant l'invention peut être aménagée dans une culasse de moteur à combustion interne 2 comme le montre les figures 3 et 6, ladite culasse coiffant une chambre de combustion 3.

On note en figures 1 à 4 et 6 à 8 que la préchambre d'allumage à clapet 1 comprend une cavité de stratification 4 dans laquelle débouchent des moyens d'allumage 5 et au moins un injecteur de stratification 6 comme le montrent les figures 3 à 6.

Comme on le voit en figures 1 à 4 et 6 à 8, la cavité de stratification 4 est reliée à la chambre de combustion 3 par un conduit de stratification 7 qui héberge le clapet à téton de guidage 50 suivant l'invention pour pouvoir former avec ce dernier - comme le montrent clairement les figures 1 et 7 - une préchambre d'allumage par torche 9 lorsque ledit clapet 50 est en position « ouverte ».

Les figures 1 et 7 montrent en effet que la préchambre d'allumage par torche 9 met la cavité de stratification 4 en relation avec la chambre de combustion 5 par l'intermédiaire d'au moins un orifice d'éjection des gaz 16.

En figures 1 à 8 on remarque que le clapet á téton de guidage 50 suivant l'invention comprend un corps principal de clapet 8 logé à faible jeu dans le conduit de stratification 7.

A titre de variante non-représentée du clapet à téton de guidage 50 suivant l'invention, le corps principal de clapet 8 peut comporter un pion d'indexation qui l'empêche de tourner selon son axe longitudinal.

Un tel pion peut être prévu notamment si des lumières non-représentées sont aménagées en périphérie dudit clapet 50 qui chacune découvre un orifice d'éjection des gaz 16 lorsque une face axiale d'obturation 10 que comporte ledit clapet 50 s'éloigne d'un siège d'obturation de conduit 11 que présente le conduit de stratification 7.

Particulièrement en figures 1, 2, 7 et 8, on remarque que le clapet à téton de guidage 50 suivant l'invention présente une face axiale d'obturation 10 aménagée sur le corps principal de clapet 8 qui peut recevoir en sa surface, selon un mode de réalisation non-représenté du clapet à téton de guidage 50 suivant l'invention, au moins une rigole d'écoulement pour canaliser les gaz vers l'orifice d'éjection des gaz 16.

Comme montré en figures 2 et 8, la face axiale d'obturation 10 peut en tout ou partie reposer sur un siège d'obturation de conduit 11 que présente le conduit de stratification 7, ceci afin d'obturer ledit conduit 7 et d'isoler la cavité de stratification 4 de la chambre de combustion 5.

On note que selon une variante non-représentée, la face axiale d'obturation 10 peut avantageusement présenter un dôme aérodynamique qui favorise l'écoulement d'un gaz 19 entre le conduit de stratification 7 et la préchambre d'allumage par torche 9, ledit dôme étant similaire à celui prévu dans le brevet N° FR 3 061 743 appartenant au demandeur.

On a montré en figures 1 à 8 que le clapet à téton de guidage 50 suivant l'invention comprend au moins une surface périphérique de centrage 12 aménagée en périphérie du corps principal de clapet 8, ladite surface 12 pouvant entrer au contact de la paroi interne du conduit de stratification 7 pour centrer ledit corps 8 dans ledit conduit 7.

On note que la surface périphérique de centrage 12 peut avantageusement se raccorder avec la face axiale d'obturation 10 et/ou la face axiale d'ouverture 13 par l'intermédiaire de chanfreins, de dépouilles ou de rayons, ceci afin d'éviter toute pression de contact excessive entre le corps principal de clapet 8 et le conduit de stratification 7 qui l'héberge.

En figures 1 à 8, on remarque que le clapet à téton de guidage 50 suivant l'invention présente une face axiale d'ouverture 13 qui est aménagée sur le corps principal de clapet 8 à l'opposé de la face axiale d'obturation 10 et qui, lorsque la face axiale d'obturation 10 ne repose pas sur le siège d'obturation de conduit 11, peut reposer sur une butée de clapet côté chambre 14 aménagée dans le conduit de stratification 7.

Les figures 1 á 8 montrent clairement que le clapet à téton de guidage 50 suivant l'invention présente au moins un téton d'orientation 15 qui est fixement solidaire du corps principal de clapet 8 et qui émerge de la face axiale d'ouverture 13 :

En figures 1, 2, 5, 7 et 8, on voit clairement que le clapet à téton de guidage 50 suivant l'invention comprend au moins un orifice axial de guidage 17 qui est aménagé dans ou à proximité de la butée de clapet côté chambre 14, et dans lequel est logé le téton d'orientation 15 à faible jeu radial, ledit téton 15 pouvant coulisser longitudinalement dans ledit orifice 17 sans jamais entièrement en sortir.

On notera qu'avantageusement, le clapet à téton de guidage 50 suivant l'invention peut être en tout ou partie d'un revêtu d'un matériau à bas coefficient de frottement et résistant à l'usure abrasive comme un « Diamond Like Coating » ou un dépôt physique en phase vapeur tel que le « lonbond 90 », cependant que les surfaces internes du conduit de stratification 7 qui entrent en contact avec ledit clapet 50 sont par exemple en tout ou partie revêtues de nickel chimique.

De façon particulièrement visible en figures 2 et 7, on remarque que selon le clapet à téton de guidage 50 suivant l'invention, le conduit de stratification 7, la face axiale d'ouverture 13 et la butée de clapet côté chambre 14 forment une chambre d'amortissement de clapet 18 dont le volume est maximal lorsque la face axiale d'obturation 10 repose sur le siège d'obturation de conduit 11, et minimal lorsque la face axiale d'ouverture 13 repose sur la butée de clapet côté chambre 14.

On notera que selon un mode particulier de réalisation non-représenté du clapet à téton de guidage 50 suivant l'invention, des poches peuvent être aménagées en surface de la butée de clapet côté chambre 14 de sorte que lorsque la face axiale d'ouverture 13 repose sur ladite butée 14. le volume résiduel de la chambre d'amortissement de clapet 18 est augmenté.

Comme montré en figures 1 à 8, l'orifice axial de guidage 17 peut avantageusement traverser de part en part le conduit de stratification 7 de sorte à relier la chambre d'amortissement de clapet 18 et la chambre de combustion 3, ceci afin qu'un gaz 19 puisse circuler entre lesdites chambres 18. 3 via le faible jeu radial laissé entre le téton d'orientation 15 et l'orifice axial de guidage 17.

En figures 1 à 5, on a montré qu'au moins un orifice d'étranglement des gaz 20 peut relier la chambre d'amortissement de clapet 18 et la chambre de combustion 3 de sorte qu'un gaz 19 peut circuler entre lesdites chambres 18, 3 via ledit orifice 20.

On a montré en figures 1 et 2 que la surface périphérique de centrage 12 du clapet à téton de guidage 50 suivant l'invention peut présenter un profil conique 21 de sorte à laisser le corps principal de clapet 8 sensiblement s'orienter par rapport au conduit de stratification 7, ceci pour garantir que la face axiale d'obturation 10 puisse reposer bien à plat sur le siège d'obturation de conduit 11 avec lequel elle coopère.

Comme on le voit clairement en figure 5, l'orifice d'éjection des gaz 16 peut être relié à la préchambre d'allumage par torche 9 par l'intermédiaire d'au moins un créneau d'éjection des gaz 22 aménagé dans le conduit de stratification 7 et au voisinage du siège d'obturation de conduit 11.

Avantageusement, ledit créneau 22 canalise un gaz 19 chaud provenant de la cavité de stratification 4 via le conduit de stratification 7 afin que d'une part, ledit gaz se refroidisse le moins possible notamment au contact dudit conduit 7 avant d'être éjecté dans la chambre de combustion 3 via l'orifice d'éjection des gaz 16 et que d'autre part, l'écoulement dudit gaz 19 soit facilité.

On a montré en figures 3 à 5 que le corps principal de clapet 8 et/ou le téton d'orientation 15 du clapet à téton de guidage 50 suivant l'invention peut être attiré en direction de la cavité de stratification 4 par une source de champ magnétique de fermeture 23 qui peut être un aimant permanent de fermeture 24 ou une bobine de fil conducteur, á l'instar de ce que prévoit le dispositif de rappel magnétique de clapet objet de la demande de brevet français numéro 3 085 718 publiée le 13 mars 2020.

En ce cas, le corps principal de clapet 8 doit être de préférence et principalement réalisé en un matériau magnétique tel que de l'acier, inoxydable ou non.

En figures 3 à 6, on a certes montré que la source de champ magnétique de fermeture 23 peut être constituée d'au moins un aimant permanent de fermeture 24 qui produit un champ magnétique.

En figure 6, on a toutefois montré que le champ magnétique produit par ledit aimant permanent 24 peut être soit contré, soit amplifié par un champ magnétique respectivement contraire ou concordant induit dans un noyau de bobine de pilotage 37 par une bobine de pilotage de champ magnétique 38, le courant électrique traversant ladite bobine 38 pouvant être piloté par un calculateur 39.

Selon cette configuration particulière de la préchambre d'allumage à clapet à téton de guidage 50 suivant l'invention, la bobine de pilotage de champ magnétique 38 peut, selon l'intensité et le sens du courant qui la traverse, annihiler le rappel magnétique du clapet à téton de guidage 50 sur le siège d'obturation de conduit 11 produit par l'aimant permanent de fermeture 24, renforcer ledit rappel magnétique, ou faire varier la puissance dudit rappel magnétique sur des échelles de temps plus ou moins longues pouvant aller de quelques degrés de rotation d'un vilebrequin d'un moteur à combustion interne, à plusieurs secondes, voire plusieurs minutes.

On remarque en figure 6, que le noyau de bobine de pilotage 37 peut comporter en sa périphérie au moins un anneau de refroidissement 40 qui réalise un pont thermique entre ledit noyau 37 et la pièce dans laquelle est logé ledit noyau 37. ceci afin de contribuer au bon refroidissement dudit noyau 37.

Comme on le remarque en figure 6, le noyau de bobine de pilotage 37 peut comporter des moyens d'appui magnétiques 41 qui prennent directement appui sur un insert d'allumage à préchambre active 42, passant pour cela au travers de moyens de serrage d'insert 43 qui maintiennent ledit insert 42 dans la culasse de moteur à combustion interne 2.

Les figures 7 et 8 illustrent que le corps principal de clapet 8 et/ou le téton d'orientation 15 peut être attiré en direction de la butée de clapet côté chambre 14 par une source de champ magnétique d'ouverture 44 qui peut être un aimant permanent d'ouverture 45 annulaire solidaire d'un nez de préchambre amagnétique 34.

Ledit aimant 45 peut être réalisé en « AlNiCo », matériau connu en soi pour résister à des températures élevées, aux chocs, et à la corrosion.

Cette configuration particulière de la préchambre d'allumage à clapet à téton de guidage 50 suivant l'invention peut avantageusement être combinée avec celle présentée en figure 6 où un aimant permanent de fermeture 24 attire le corps principal de clapet 8 et/ou le téton d'orientation 15 en direction de la cavité de stratification 4, le champ magnétique dudit aimant permanent 24 pouvant soit être contré, soit être amplifié par un champ magnétique respectivement contraire ou concordant induit dans un noyau de bobine de pilotage 37 par une bobine de pilotage de champ magnétique 38, le courant électrique traversant ladite bobine 38 pouvant être piloté par un calculateur 39.

Cette combinaison de moyens permet notamment d'ouvrir ou de fermer dynamiquement le clapet à tèton de guidage 50 selon que les champs magnétiques produits respectivement par l'aimant permanent de fermeture 24, l'aimant permanent d'ouverture 45 et la bobine de pilotage de champ magnétique 38 résultent en un champ magnétique au niveau du clapet à téton de guidage 50 qui tend à plaquer ledit clapet 50 soit, sur le siège d'obturation de clapet 11, soit, sur la butée de clapet côté chambre 14

A titre de variante, le clapet à téton de guidage 50 peut être lui-même aimanté de façon permanente de sorte à être attiré ou repoussé par le champ magnétique produit par l'aimant permanent de fermeture 24 et/ou la bobine de pilotage de champ magnétique 38.

Pour cela, ledit clapet 50 peut intégrer un aimant permanent, solidaire de l'une quelconque des surfaces dudit clapet 50. ou intégré en tout ou partie à l'intérieur de ce dernier.

Selon une variante particulière de la préchambre d'allumage à clapet à téton de guidage 50 suivant l'invention montrée en figures 6 à 8, le téton d'orientation 15 peut comporter un épaulement d'amortissement 46 qui coopère avec un lamage d'amortissement 47 aménagé en entrée de l'orifice axial de guidage 17, ledit lamage 47 débouchant dans la chambre d'amortissement de clapet 18 tandis que la position relative dudit épaulement 46 et dudit lamage 47 est prévue de telle sorte que lorsque le clapet à téton de guidage 50 a parcouru une certaine distance lors de son déplacement depuis le siège d'obturation de conduit 11 vers la butée de clapet côté chambre 14, l'épaulement d'amortissement 46 arrive au niveau du lamage d'amortissement 47 afin de restreindre le passage qui est laissé aux gaz contenus dans la chambre d'amortissement de clapet 18 pour aller vers la chambre de combustion 3 via le jeu radial laissé entre le téton d'orientation 15 et l'orifice axial de guidage 17.

On note que le lamage d'amortissement 47 peut être confondu avec la butée de clapet côté chambre 14, voire être remplacé par une protubérance.

On a montré en figures 6 à 8 que le lamage d'amortissement 47 peut être directement ou indirectement relié à la chambre de combustion 3 par au moins un conduit de dépressurisation 48 par lequel les gaz contenus dans la chambre d'amortissement de clapet 18 peuvent librement aller vers la chambre de combustion 3 tant que l'épaulement d'amortissement 46 n'est pas encore arrivé au niveau du lamage d'amortissement 47 alors que le clapet à téton de guidage 50 se déplace depuis le siège d'obturation de conduit 11 vers la butée de clapet côté chambre 14.

On a montré en figures 6 à 8 que le conduit de stratification 7 peut comprendre un manchon rapporté amagnétique 26 sur lequel est aménagé le siège d'obturation de conduit 11, ledit manchon 26 pouvant être monté fretté autour d'un tube d'éjection des gaz 25 que forme le conduit de stratification 7.

En ce cas, le manchon rapporté amagnétique 26 peut avantageusement être réalisé en « Inconel », un matériau qui présente de hautes caractéristiques mécaniques à températures élevées.

On note sur les figures 7 et 8 qu'un léger décalage axial peut être prévu entre le siège d'obturation de conduit 11 aménagé sur le manchon rapporté amagnétique 26 et l'extrémité du tube d'éjection des gaz 25, ledit décalage laissant la pression s'immiscer entre ledit tube 25 et la face axiale d'obturation 10 de sorte à faciliter l'ouverture du clapet à tèton de guidage 50 par la pression des gaz contenus dans la cavité de stratification 4.

### FONCTIONNEMENT DE L'INVENTION :

Le fonctionnement de la préchambre d'allumage à clapet à téton de guidage 50 selon l'invention se comprend aisément à la vue des figures 1 à 8.

En figures 1 et 2 et en figures 7 et 8, on note que le conduit de stratification 7 est, à titre d'exemple non-limitatif, constitué d'au moins trois parties distinctes.

De première part, ledit conduit 7 comprend un tube d'éjection des gaz 25 fait d'un matériau magnétique, en l'occurrence de l'acier inoxydable à haute perméabilité magnétique et faible rémanence magnétique, ledit tube 25 recevant le siège d'obturation de conduit 11 en figures 1 à 5.

De deuxième part, le conduit de stratification 7 comprend un manchon rapporté amagnétique 26 qui est par exemple réalisé en cuivre ou en « Inconel », et qui est monté fretté sur le tube d'éjection des gaz 25. Selon les variantes montrées en figures 6 à 8, c'est le manchon rapporté amagnétique 26 qui reçoit le siège d'obturation de conduit 11 et non le tube d'éjection des gaz 25, contrairement donc à ce qui est montré en figures 1 à 5.

Pour finir et de troisième part, le conduit de stratification 7 comprend un nez de préchambre amagnétique 34 en cuivre ou en inox, revêtu ou non d'un matériau antifriction à haute résistance abrasive. Ledit nez 34 est monté fretté à cheval entre le tube d'éjection des gaz 25 et le manchon rapporté amagnétique 26. De plus, ledit nez 34 héberge à faible jeu le clapet à téton de guidage 50 et reçoit la butée de clapet côté chambre 14.

Comme on le remarque particulièrement en figures 2, 7 et 8, le nez de préchambre amagnétique 34 forme avec le clapet à téton de guidage 50 une chambre d'amortissement de clapet 18, cette dernière étant mise en communication avec la chambre de combustion 3 d'une part, via l'espace formé par le faible jeu radial laissé entre le téton d'orientation 15 et l'orifice axial de guidage 17, et d'autre part et seulement selon la configuration montrée en figures 1 à 5, via un orifice d'étranglement des gaz 20.

Comme le montrent clairement les figures 1, 2, 7 et 8, le téton d'orientation 15 peut coulisser longitudinalement dans l'orifice axial de guidage 17 sans jamais en sortir entièrement.

On a calculé le jeu laissé entre le téton d'orientation 15 et l'orifice axial de guidage 17 pour que le clapet à téton de guidage 50 puisse basculer suffisamment pour compenser tout défaut de perpendicularité entre le tube d'éjection des gaz 25 et le siège d'obturation de conduit 11, c'est-à-dire pour garantir que la face axiale d'obturation 10 puisse bien entrer en contact franc sur toute sa surface avec ledit siège 11.

Un léger basculement du clapet à téton de guidage 50 est possible en ce que seule une ligne périphérique de contact de très faible longueur axiale située sur la surface périphérique de centrage 12 et à proximité de la face axiale d'obturation 10 entre effectivement en contact avec la paroi interne du conduit de stratification 7 qui, en l'occurrence, se trouve être la paroi interne du nez de préchambre amagnétique 34.

On peut remarquer en figures 1 et 2, qu'à titre d'exemple de réalisation de la préchambre d'allumage à clapet à téton de guidage 50 selon l'invention, la surface périphérique de centrage 12 aménagée en périphérie du corps principal de clapet 8 présente un profil conique 21 de sorte à laisser ledit corps 8 sensiblement s'orienter par rapport au conduit de stratification 7, ceci sans que jamais ledit profil conique 21 n'entre en contact sur toute sa hauteur avec la paroi interne du nez de préchambre amagnétique 34.

Ainsi, seule la partie supérieure - c'est-à-dire le plus grand diamètre - du profil conique 21 de la surface périphérique de centrage 12 peut entrer en contact avec la paroi interne du nez de préchambre amagnétique 34, la surface restante dudit profil 21 se contentant de s'approcher plus ou moins près de ladite paroi sans jamais toucher cette dernière.

Les figures 7 et 8 montrent quant à elles que la surface périphérique de centrage 12 présente un profil troncosphérique au niveau de sa ligne périphérique de contact, cependant que le reste de ladite surface 12 est purement cylindrique.

En figures 1 et 7, on a montré le clapet á téton de guidage 50 en position « ouverte », la face axiale d'obturation 10 aménagée sur le corps principal de clapet 8 étant éloignée du siège d'obturation de conduit 11 avec lequel elle coopère cependant que la face axiale d'ouverture 13 repose sur ou est très proche de la butée de clapet côté chambre 14 aménagée dans le conduit de stratification 7 et plus précisément, dans le nez de préchambre amagnétique 34 qui forme pour partie ledit conduit 7.

On remarque qu'en étant en position « ouverte », le clapet à téton de guidage 50 forme avec le conduit de stratification 7 une préchambre d'allumage par torche 9 de forme annulaire, ladite préchambre 9 communiquant d'une part, avec la cavité de stratification 4, et d'autre part, avec la chambre de combustion 3 par l'intermédiaire d'orifices d'éjection des gaz 16.

La position « ouverte » du clapet à téton de guidage 50 survient lorsque la pression des gaz régnant dans la cavité de stratification 4 est supérieure à celle régnant dans la chambre de combustion 3.

Cette situation résulte principalement de la mise à feu par les moyens d'allumage 5 de la charge pilote 31 préalablement introduite par l'injecteur de stratification 6 dans la cavité de stratification 4, ladite charge pilote 31 étant composée d'un mélange air-carburant AF facilement inflammable préalablement mis sous pression par des moyens de compression 30 tels que montrés en figures 3 et 6 qui, en l'occurrence, sont ici formés d'un compresseur de stratification 32 quel qu'en soit le type.

On remarque en figures 3 à 6 que les moyens d'allumage 5 ne sont autres qu'une bougie d'allumage 33 connue en soi.

On a montré en figures 2 et 8 le clapet à téton de guidage 50 en position « fermée », la face axiale d'obturation 10 aménagée sur le corps principal de clapet 8 étant au contact du siège d'obturation de conduit 11 avec lequel elle coopère cependant que la face axiale d'ouverture 13 est éloignée de la butée de clapet côté chambre 14.

Comme on peut aisément le déduire des figures 1 et 2 et des figures 7 et 8, pour passer de la position « ouverte » à la position « fermée », le clapet à téton de guidage 50 a été contraint de rester approximativement perpendiculaire à l'axe du conduit de stratification 7 par le téton d'orientation 15.

On remarque que si le profil conique 21 montré en figures 1 et 2 ou la partie purement cylindrique de la surface périphérique de centrage 12 montrée en figures 7 et 8 impliquent que ladite surface périphérique 12 n'entre en contact avec la paroi interne du nez de préchambre amagnétique 34 que sur une ligne périphérique de contact de faible hauteur axiale situèe à proximité de la face axiale d'obturation 10, le téton d'orientation 15 n'entre quant à lui en contact avec l'orifice axial de guidage 17 qu'au niveau du débouché de ce dernier dans la chambre de combustion 3.

Ainsi, une distance axiale maximale est laissée entre les deux points de contact du clapet à téton de guidage 50 avec le conduit de stratification 7, ce qui évite tout risque de coincement dudit clapet 50 dans ledit le conduit 7 par arc-boutement.

Pour renforcer la stabilité angulaire du clapet à téton de guidage 50, on a montré en figure 5 qu'avantageusement, la chambre d'amortissement de clapet 18 est reliée à la chambre de combustion 3 par trois orifices d'étranglement des gaz 20 répartis sur la surface de la butée de clapet côté chambre 14.

Cette configuration particulière force la face axiale d'ouverture 13 à adopter une attitude la plus parallèle possible à ladite butée 14, particulièrement lorsque ladite face 13 arrive à seulement quelques centièmes de millimètres de ladite butée 14 lors de l'ouverture du clapet à téton de guidage 50.

On comprend de ce qui précède que, contrairement au clapet de stratification qu'il remplace tel que décrit dans le brevet FR 3 061 743 relatif à une « préchambre d'allumage à clapet » et ses différents perfectionnements, le clapet à téton de guidage 50 ne peut pas se coincer dans le conduit de stratification 7 avec lequel il coopère par arc-boutement.

En outre, ledit clapet à téton 50 ne peut plus s'orienter de façon incontrôlée contrairement au clapet de stratification tel que décrit dans la demande de brevet français N° 1904961 relative à un « insert d'allumage à préchambre active », le pourtour de ce dernier clapet étant troncosphérique pour éviter son coincement dans son logement.

Il résulte de la configuration particulière de la préchambre d'allumage à clapet à téton de guidage 50 selon l'invention que ledit clapet 50 translate entre le siège d'obturation de conduit 11 et la butée de clapet côté chambre 14 avec lesquels il coopère tout en restant approximativement perpendiculaire à l'axe du conduit de stratification 7 pendant toute sa course, ou du moins, en ne pouvant basculer que - par exemple et selon les jeux initiaux choisis et les températures relatives des différentes pièces mises en jeu - de un degré au maximum.

En conséquence de ce qui précède, les torches de gaz chaud sont bien émises simultanément dans la chambre de combustion 3 par la préchambre d'allumage par torche 9, cependant que lesdites torches sont de composition, de température, de géométrie et de puissance comparables.

Cette homogénéité des torches d'allumage émises dans la chambre de combustion 3 du moteur à combustion interne qui reçoit la préchambre d'allumage à clapet à téton de guidage 50 selon l'invention est garante d'une haute efficacité énergétique, d'une grande stabilité et d'une sécurité optimale notamment à l'égard du cliquetis, dudit moteur.

Que le clapet à téton de guidage 50 se déplace en direction du siège d'obturation de conduit 11 ou en direction de la butée de clapet côté chambre 14, la stabilité en orientation dudit clapet 50 selon ses deux axes perpendiculaires à celui du conduit de stratification 7 permet également de garantir une obturation optimale dudit conduit de stratification 7 par ledit clapet 50.

On entend par « obturation optimale » qu'un contact franc est rapidement établi entre la face axiale d'obturation 10 et le siège d'obturation de conduit 11, qui interdit aux gaz 19 contenus dans la chambre de combustion 3 de pénétrer dans la cavité de stratification 4 via le conduit de stratification 7.

En effet, le guidage en orientation qu'impose le téton d'orientation 15 au clapet à téton de guidage 50 dans son ensemble, interdit à ce dernier de s'ouvrir et de se fermer en deux temps comme exposé en introduction.

En conséquence, seule la force de décollement qu'exerce sur le clapet à téton de guidage 50 le champ magnétique produit par la source de champ magnétique de fermeture 23 montrée en figures 3 à 5 - en l'occurrence un aimant permanent de fermeture 24 - détermine l'effort de collage et de décollage dudit clapet 50 du siège d'obturation de conduit 11.

Grâce à la configuration particulière de la préchambre d'allumage à clapet à téton de guidage 50 selon l'invention, le couple qu'exerce sur ledit clapet 50 ledit champ magnétique n'intervient plus - ou pratiquement plus - ni au collage ni au décollage, ce qui est avantageux car l'effort pour contrer ledit couple est de très faible intensité par rapport à celui nécessaire pour contrer la force de collage magnétique.

Or, interdire aux gaz 19 contenus dans la chambre de combustion 3 de pénétrer dans la cavité de stratification 4 permet de conserver intègre la charge pilote 31 contenue dans la cavité de stratification 4, ceci en prévenant tout mélange de ladite charge 31 avec la charge principale 27 contenue dans la chambre de combustion 3, cette dernière charge 27 pouvant être fortement diluée avec de l'air ou des gaz d'échappement re-circulés.

Conserver intègre la charge pilote 31 garantit notamment une bonne stabilité de la combustion de la charge pilote 31 dans la cavité de stratification 4, et par voie de conséquence, une bonne stabilité du moteur à combustion interne, condition importante au meilleur rendement possible de ce dernier.

La fermeture franche du clapet à téton de guidage 50 permet également d'optimiser le refroidissement de ce dernier sur le siège d'obturation de conduit 11, toute lame de gaz 19 laissée entre ledit clapet 50 et ledit siège 11 étant de nature à réduire la quantité de chaleur cédée par ledit clapet 50 audit siège 11.

Ladite fermeture franche n'est d'ailleurs pas la seule á optimiser le refroidissement du clapet à téton de guidage 50 selon l'invention.

En effet, le profil conique 21, ou purement cylindrique selon le cas, de la surface périphérique de centrage 12, laisse un jeu moyen entre ladite surface 12 et la paroi interne du nez de préchambre amagnétique 34 faible et surtout, une surface plus étendue que celle laissée par un clapet de stratification troncosphérique tel que décrit dans la demande de brevet français N° 1904961.

Outre une meilleure étanchéité du clapet à téton de guidage 50 favorable au bon fonctionnement de la chambre d'amortissement de clapet 18, cette meilleure proximité radiale et cette surface plus étendue laissées entre ledit profil conique 21 et le nez de préchambre amagnétique 34 favorisent la cession de chaleur par ledit clapet 50 audit nez 34, ce dernier étant plus froid que ledit clapet 50.

On remarque - particulièrement en figure 5 - qu'avantageusement, l'orifice d'éjection des gaz 16 est relié à la préchambre d'allumage par torche 9 par l'intermédiaire de créneaux d'éjection des gaz 22 aménagés dans le manchon rapporté amagnétique 26 constitutif du conduit de stratification 7, et au voisinage du siège d'obturation de conduit 11.

Outre l'avantage de canaliser les gaz 19 chauds provenant de la cavité de stratification 4 via le conduit de stratification 7 pour que lesdits gaz 19 se refroidissent le moins possible au contact dudit conduit 7 et que leur écoulement soit facilité, ledit créneaux 22 laissent une plus grande surface froide proche de la face axiale d'obturation 10, ladite surface faisant face à ladite face 10.

Ladite surface froide proche favorise donc également le refroidissement du clapet à téton de guidage 50 selon l'invention.

On remarquera en figures 3 à 5 que la bougie d'allumage 33 est pourvue d'une enceinte d'inverseur 28 qui fait corps avec ladite bougie 12, à l'instar de ce que décrit la demande de brevet français N° 2001508 intitulée « préchambre d'allumage à clapet à sens de combustion inversé », ladite enceinte 28 recevant une charge d'amorçage.

On note en figure 3 et 4 que l'électrode de masse 35 qui fait corps avec l'enceinte d'inverseur 28 est constituée d'un plot d'iridium protubérant 29 qui fait face à l'électrode centrale 36 de la bougie d'allumage 33, ladite l'électrode centrale 36 étant également faite en iridium.

En ce cas d'ailleurs, trois buses d'éjection principales fortement déportées vers la périphérie de l'enceinte d'inverseur 28 relient cette dernière avec l'intérieur de la cavité de stratification 4, lesdites trois buses étant peu visibles sur les figures, vu leur petitesse.

En figure 6, on a montré une variante de la préchambre d'allumage à clapet à téton de guidage 50 selon l'invention selon laquelle la source de champ magnétique de fermeture 23 est constituée d'un aimant permanent de fermeture 24 qui produit un champ magnétique, lequel peut être soit contré, soit amplifié par un champ magnétique respectivement contraire ou concordant induit dans un noyau de bobine de pilotage 37 par une bobine de pilotage de champ magnétique 38 traversée par un courant électrique dont l'intensité est pilotée par un calculateur 39.

Avantageusement, le noyau de bobine de pilotage 37 peut être fait d'un matériau à haute perméabilité magnétique et faible rémanence magnétique.

Selon cette configuration particulière de la préchambre d'allumage à clapet à téton de guidage 50 suivant l'invention, la bobine de pilotage de champ magnétique 38 peut, selon l'intensité et le sens du courant qui la traverse, annihiler le rappel magnétique du clapet á téton de guidage 50 sur le siège d'obturation de conduit 11 produit par l'aimant permanent de fermeture 24, renforcer ledit rappel magnétique, ou faire varier la puissance dudit rappel sur des échelles de temps plus ou moins longues pouvant aller de quelques degrés de rotation d'un vilebrequin d'un moteur à combustion interne, à plusieurs secondes, voire plusieurs minutes.

Le pilotage dynamique du rappel magnétique du clapet à téton de guidage 50 suivant l'invention permet notamment d'éviter tout arc-boutement résiduel dudit clapet 50 lors de l'ouverture de ce dernier consécutif à la combustion de la charge pilote 31 contenue dans la cavité de stratification 4.

En effet, si le téton d'orientation 15 s'oppose au basculement du clapet à téton de guidage 50 ledit basculement résultant du couple qu'exerce le champ magnétique sur ledit clapet 50. la suppression dudit champ par la bobine de pilotage de champ magnétique 38 annule la source même dudit basculement.

Pour cela, le calculateur 39 peut supprimer le rappel magnétique du clapet à téton de guidage 50 quelques centaines de microsecondes avant que ledit clapet 50 ne s'ouvre sous l'effet de la combustion de la charge pilote 31.

Une fois les torches d'allumage émises par la préchambre d'allumage par torche 9 dans la chambre de combustion 3, le calculateur 39 peut restaurer le rappel magnétique du clapet à téton de guidage 50 de sorte à ramener ce dernier au contact du siège d'obturation de conduit 11, à moindre choc.

Cette stratégie de pilotage du champ magnétique de rappel du clapet à téton de guidage 50 suivant l'invention permet de réduire fortement l'usure abrasive dudit clapet 50 et du conduit de stratification 7 dans lequel il est logé à faible jeu.

En outre, piloter le champ magnétique de rappel du clapet à téton de guidage 50 permet d'assurer le démarrage à froid d'un moteur à combustion interne à basses températures en permettant à la cavité de stratification 4 de n'être plus remplie de mélange comburant- carburant AF via l'injecteur de stratification 6, mais via les orifice d'éjection des gaz 16.

En ce cas, le clapet à tèton de guidage 50 est laissé ouvert pendant la compression dudit moteur, de sorte à remplir la cavité de stratification 4.

Lorsque durant ladite compression la pression dans la cavité de stratification 4 atteint les limites de re-condensation du mélange comburant- carburant AF que contient ladite cavité 4, le clapet à téton de guidage 50 est forcé en fermeture par le calculateur 39, ce qui garantit une parfaite combustion dudit mélange et apporte une solution robuste à la difficulté voire l'impossibilité de démarrer les moteurs à préchambre d'allumage à très basses températures.

Le pilotage du champ magnétique de rappel du clapet à téton de guidage 50 permet en outre d'optimiser la vidange de la cavité de stratification 4 entre deux remplissages, de sorte à minimiser la quantité de gaz brûlés résiduels du cycle précédent et à améliorer la combustion de la charge pilote 31 dans ladite cavité 4.

En effet, une fois les torches d'allumages émises dans la chambre de combustion 3 via les orifices d'éjection des gaz 16, forcer la fermeture du clapet à téton de guidage 50 au moment où la pression dans la cavité de stratification 4 est la plus basse permet d'obtenir le résultat attendu.

On remarque en figures 7 et 8 l'aimant permanent d'ouverture 45 qui peut être prévu selon l'invention pour attirer le clapet à téton de guidage 50 en direction de la butée de clapet côté chambre 14.

Ledit aimant 45 coopère avec l'aimant permanent de fermeture 24 et la bobine de pilotage de champ magnétique 38. Ledit aimant 45 laisse selon le cas forcer la fermeture dudit clapet à téton de guidage 50 sur le siège d'obturation de conduit 11, mais il permet le cas échéant de forcer l'ouverture dudit clapet 50 en direction de la butée de clapet côté chambre 14.

Ainsi, le calculateur 39 peut, via la bobine de pilotage de champ magnétique 38, neutraliser le champ magnétique de l'aimant permanent de fermeture 24 produit par ce dernier au niveau du clapet à téton de guidage 50.

En ce cas, seul le champ magnétique produit par l'aimant permanent d'ouverture 45 subsiste au niveau du clapet à téton de guidage 50, ce dernier étant attiré en direction de la butée de clapet côté chambre 14.

A l'inverse, le calculateur 39 peut, en fonction de l'intensité et du sens du courant électrique qu'il fait circuler dans la bobine de pilotage de champ magnétique 38, soit laisser agir soit renforcer le champ magnétique produit au niveau du clapet à téton de guidage 50 par l'aimant permanent de fermeture 24.

Le champ magnétique produit par l'aimant permanent de fermeture 24 étant naturellement plus intense au niveau du clapet à téton de guidage 50 que celui produit par l'aimant permanent d'ouverture 45, si aucun courant électrique ne circule dans bobine de pilotage de champ magnétique 38, ledit clapet 50 est attiré en direction du siège d'obturation de conduit 11.

On comprend aisément que le calculateur 39 peut avantageusement donner l'avantage à l'un ou l'autre des champs magnétiques antagonistes de l'aimant permanent de fermeture 24 ou de l'aimant permanent d'ouverture 45 via la bobine de pilotage de champ magnétique 38, ceci pour forcer au besoin le clapet á téton de guidage 50 à aller en direction du siège d'obturation de conduit 11, ou à aller en direction de la butée de clapet côté chambre 14.

Cette fonction « tirer-pousser » du clapet à téton de guidage 50 que gère le le calculateur 39 permet notamment de débloquer ledit clapet 50 s'il est soumis à l'encrassement, de forcer son ouverture notamment si la gravité ne l'y aide pas sur un moteur à pistons à plat, ou à optimiser le remplissage et la vidange de la cavité de stratification 4 en toutes circonstances.

On remarque en figures 7 et 8 que le téton d'orientation 15 comporte un épaulement d'amortissement 46 qui coopère avec un lamage d'amortissement 47 aménagé en entrée de l'orifice axial de guidage 17, ledit lamage 47 débouchant dans la chambre d'amortissement de clapet 18.

Cette configuration particulière du clapet à téton de guidage 50 suivant l'invention permet à ce dernier de parcourir la première partie de sa course vers la butée de clapet côté chambre 14 en étant le moins freiné possible par la chambre d'amortissement de clapet 18.

En effet, tant que l'épaulement d'amortissement 46 n'est pas arrivé au niveau du lamage d'amortissement 47, les gaz contenus dans la chambre d'amortissement de clapet 18 peuvent très librement sortir de cette dernière en direction de la chambre de combustion 3, via le jeu laissé entre ledit épaulement 46 et ledit lamage 47, puis via les conduits de dépressurisation 48 tels que montrés en figures 7 et 8.

Lorsque l'épaulement d'amortissement 46 arrive au niveau du lamage d'amortissement 47, les gaz se trouvent fortement laminés par la restriction de passage ainsi formée, de sorte que durant la deuxième partie de sa course vers la butée de clapet côté chambre 14, le clapet à téton de guidage 50 se trouve freiné, ce qui réduit d'autant la puissance de tout choc pouvant survenir entre la face axiale d'ouverture 13 et la butée de clapet côté chambre 14.

Cette configuration particulière du clapet à téton de guidage 50 selon l'invention confére donc à ce dernier une durée de vie plus longue.

On notera que l'exemple de réalisation de la préchambre d'allumage à clapet à téton de guidage 50 selon l'invention qui vient d'être décrit est non limitatif.

Par ailleurs, selon des utilisations non couvertes par l'invention, le clapet à tèton de guidage 50 peut s'appliquer à d'autres domaines que les seuls moteurs à combustion interne. Ledit clapet 50 peut par exemple s'appliquer á des cloueurs à gaz. à des armes à feu, ou à tout appareil nécessitant la mise á feu d'une charge principale au moyen d'une charge pilote avec la meilleure efficacité possible.

## Revendications

1. Préchambre d'allumage à clapet (1) configurée pour être aménagée dans une culasse de moteur à combustion interne (2) qui coiffe une chambre de combustion (3), ladite préchambre (1) comprenant une cavité de stratification (4) dans laquelle débouchent des moyens d'allumage (5) et au moins un injecteur de stratification (6), ladite cavité (4) étant configurée pour être reliée à la chambre de combustion (3) par un conduit de stratification (7) qui héberge un clapet orienté (50) pour pouvoir former avec ce dernier une préchambre d'allumage par torche (9) qui met la cavité de stratification (6) en relation avec la chambre de combustion (5) par l'intermédiaire d'au moins un orifice d'éjection des gaz (16) selon laquelle le clapet orienté (50) comprend :
• Un corps principal de clapet (8) logé à faible jeu dans le conduit de stratification (7) ;
• Une face axiale d'obturation (10) aménagée sur le corps principal de clapet (8) et qui peut en tout ou partie reposer sur un siège d'obturation de conduit (11) que présente le conduit de stratification (7) afin d'obturer ledit conduit (7) et d'isoler la cavité de stratification (4) de la chambre de combustion (5) ;
• Au moins une surface périphérique de centrage (12) aménagée en périphérie du corps principal de clapet (8), ladite surface (12) pouvant entrer au contact de la paroi interne du conduit de stratification (7) pour centrer ledit corps (8) dans ledit conduit (7) ;
• Une face axiale d'ouverture (13) qui est aménagée sur le corps principal de clapet (8) à l'opposé de la face axiale d'obturation (10) et qui, lorsque la face axiale d'obturation (10) ne repose pas sur le siège d'obturation de conduit (11), peut reposer sur une butée de clapet côté chambre (14) aménagée dans le conduit de stratification (7) ;
Et une chambre d'amortissement de clapet (48) formée par le conduit de stratification, la face axiale d'ouverture et la butée de clapet côté chambre et dont le volume est maximal lorsque la face axiale d'obturation repose sur le siège d'obturation de conduit, et minimal lorsque la face axiale d'ouverture repose sur la butée de clapet côté chambre;
**caractérisée en ce que** le clapet orienté (50) comprend:
• Au moins un téton d'orientation (15) qui est fixement solidaire du corps principal de clapet (8) et qui émerge de la face axiale d'ouverture (13) ;
• Au moins un orifice axial de guidage (17) qui est aménagé dans ou à proximité de la butée de clapet côté chambre (14) et dans lequel est logé le téton d'orientation (15) à faible jeu radial, ledit téton (15) pouvant coulisser longitudinalement dans ledit orifice (17) sans jamais entièrement en sortir.

2. Préchambre d'allumage à clapet (1) suivant la revendication 1, **caractérisé en ce que** l'orifice axial de guidage (17) traverse de part en part le conduit de stratification (7) de sorte à relier la chambre d'amortissement de clapet (18) et la chambre de combustion (3), ceci afin qu'un gaz (19) puisse circuler entre lesdites chambres (18, 3) via le faible jeu radial laissé entre le téton d'orientation (15) et l'orifice axial de guidage (17).

3. Préchambre d'allumage à clapet (1) suivant la revendication 1, **caractérisé en ce qu'**au moins un orifice d'étranglement des gaz (20) relie la chambre d'amortissement de clapet (18) et la chambre de combustion (3) de sorte qu'un gaz (19) peut circuler entre lesdites chambres (18, 3) via ledit orifice (20).

4. Préchambre d'allumage à clapet (1) suivant la revendication 1, **caractérisé en ce que** la surface périphérique de centrage (12) présente un profil conique (21).

5. Préchambre d'allumage à clapet (1) suivant la revendication 1, **caractérisé en ce que** l'orifice d'éjection des gaz (16) est relié à la préchambre d'allumage par torche (9) par l'intermédiaire d'au moins un créneau d'éjection des gaz (22) aménagé dans le conduit de stratification (7) et au voisinage du siège d'obturation de conduit (11).

6. Préchambre d'allumage à clapet (1) suivant la revendication 1, **caractérisé en ce que** le corps principal de clapet (8) et/ou le téton d'orientation (15) est attiré en direction de la cavité de stratification (4) par une source de champ magnétique de fermeture (23).

7. Préchambre d'allumage à clapet (1) suivant la revendication 6, **caractérisé en ce que** la source de champ magnétique de fermeture (23) est constituée d'au moins un aimant permanent de fermeture (24) qui produit un champ magnétique, ce dernier pouvant être soit contré, soit amplifié par un champ magnétique respectivement contraire ou concordant induit dans un noyau de bobine de pilotage (37) par une bobine de pilotage de champ magnétique (38).

8. Préchambre d'allumage à clapet (1) suivant la revendication 1, **caractérisé en ce que** le corps principal de clapet (8) et/ou le téton d'orientation (15) est attiré en direction de la butée de clapet côté chambre (14) par une source de champ magnétique d'ouverture (44).

9. Préchambre d'allumage à clapet (1) suivant la revendication 2, **caractérisé en ce que** le téton d'orientation (15) comporte un épaulement d'amortissement (46) qui coopère avec un lamage d'amortissement (47) aménagé en entrée de l'orifice axial de guidage (17), ledit lamage (47) débouchant dans la chambre d'amortissement de clapet (18).

10. Préchambre d'allumage à clapet (1) suivant la revendication 9, **caractérisé en ce que** le lamage d'amortissement (47) est directement ou indirectement relié à la chambre de combustion (3) par au moins un conduit de dépressurisation (48).

11. Préchambre d'allumage à clapet (1) suivant la revendication 1, **caractérisé en ce que** le conduit de stratification (7) comprend un manchon rapporté amagnétique (26) sur lequel est aménagé le siège d'obturation de conduit (11).

## Patentansprüche

1. Zündvorkammer mit Ventil (1), die dafür ausgelegt ist, in einem Verbrennungsmotor-Zylinderkopf (2) angeordnet zu werden, welcher auf einer Brennkammer (3) sitzt, wobei die Vorkammer (1) einen Schichtbildungshohlraum (4) umfasst, in welchen Zündmittel (5) und mindestens ein Schichtbildungsinjektor (6) einmünden, wobei der Hohlraum (4) dafür ausgelegt ist, mittels einer Schichtbildungsleitung (7), in welcher ein ausgerichtetes Ventil (50) aufgenommen ist, mit der Brennkammer (3) verbunden zu werden, um mit letzterer eine Vorkammer zum Zünden mittels Brenner (9) zu bilden, welche den Schichtbildungshohlraum (6) über mindestens eine Gasausstoßöffnung (16) mit der Brennkammer (5) in Verbindung bringt, wobei das ausgerichtete Ventil (50) Folgendes umfasst
• einen Hauptventilkörper (8), der mit geringem Spiel in der Schichtbildungsleitung (7) aufgenommen ist;
• eine axiale Absperrseite (10), die an dem Hauptventilkörper (8) angeordnet ist und die vollständig oder teilweise auf einem Leitungsabsperrsitz (11) aufliegen kann, mit welchem die Schichtbildungsleitung (7) versehen ist, um die Leitung (7) abzusperren und den Schichtbildungshohlraum (4) von der Brennkammer (5) zu isolieren;
• mindestens eine umlaufende Zentrierfläche (12), die am Umfang des Hauptventilkörpers (8) angeordnet ist, wobei die Fläche (12) mit der Innenwand der Schichtbildungsleitung (7) in Kontakt kommen kann, um den Körper (8) in der Leitung (7) zu zentrieren;
• eine axiale Öffnungsseite (13), die gegenüber der axialen Absperrseite (10) an dem Hauptventilkörper (8) angeordnet ist und die, wenn die axiale Absperrseite (10) nicht auf dem Leitungsabsperrsitz (11) aufliegt, auf einem kammerseitigen Ventilanschlag (14) aufliegen kann, welcher in der Schichtbildungsleitung (7) angeordnet ist;
▪ und eine Ventilabfederungskammer (48), die von der Schichtbildungsleitung, der axialen Öffnungsseite und dem kammerseitigen Ventilanschlag gebildet wird, wobei ihr Volumen den größten Wert erreicht, wenn die axiale Absperrseite auf dem Leitungsabsperrsitz aufliegt, und den geringsten Wert erreicht, wenn die axiale Öffnungsseite auf dem kammerseitigen Ventilanschlag aufliegt;
**dadurch gekennzeichnet, dass** das ausgerichtete Ventil (50) Folgendes umfasst:
• mindestens einen Ausrichtungszapfen (15), der fest mit dem Ventilhauptkörper (8) verbunden ist und der sich ausgehend von der axialen Öffnungsseite (13) erstreckt;
• mindestens eine axiale Führungsöffnung (17), welche in dem kammerseitigen Ventilanschlag (14) oder in der Nähe desselben angeordnet ist und in welcher der Ausrichtungszapfen (15) mit geringem radialem Spiel aufgenommen ist, wobei der Zapfen (15) in Längsrichtung in der Öffnung (17) gleiten kann, ohne diese jemals vollständig zu verlassen.

2. Zündvorkammer mit Ventil (1) gemäß Anspruch 1, **dadurch gekennzeichnet, dass** die axiale Führungsöffnung (17) die Schichtbildungsleitung (7) vollständig durchsetzt, sodass sie die Ventilabfederungskammer (18) und die Brennkammer (3) verbindet, wobei dies dazu dient, dass ein Gas (19) durch das geringe radiale Spiel, welches zwischen dem Ausrichtungszapfen (15) und der axialen Führungsöffnung (17) verbleibt, von einer der Kammern (18, 3) in die andere gelangen kann.

3. Zündvorkammer mit Ventil (1) gemäß Anspruch 1, **dadurch gekennzeichnet, dass** mindestens eine Gasdrosselöffnung (20) die Ventilabfederungskammer (18) und die Brennkammer (3) derart verbindet, dass ein Gas (19) durch die Öffnung (20) von einer der Kammern (18, 3) in die andere gelangen kann.

4. Zündvorkammer mit Ventil (1) gemäß Anspruch 1, **dadurch gekennzeichnet, dass** die umlaufende Zentrierfläche (12) ein konisches Profil (21) aufweist.

5. Zündvorkammer mit Ventil (1) gemäß Anspruch 1, **dadurch gekennzeichnet, dass** die Gasausstoßöffnung (16) über mindestens eine Gasausstoßlücke (22), welche in der Schichtbildungsleitung (7) und in der Nähe des Leitungsabsperrsitzes (11) angeordnet ist, mit der Vorkammer zum Zünden mittels Brenner (9) verbunden ist.

6. Zündvorkammer mit Ventil (1) gemäß Anspruch 1, **dadurch gekennzeichnet, dass** der Hauptventilkörper (8) und/oder der Ausrichtungszapfen (15) durch eine schließend wirkende Magnetfeldquelle (23) zum Schichtbildungshohlraum (4) hingezogen werden.

7. Zündvorkammer mit Ventil (1) gemäß Anspruch 6, **dadurch gekennzeichnet, dass** die schließend wirkende Magnetfeldquelle (23) aus mindestens einem schließend wirkenden Permanentmagneten (24) besteht, der ein Magnetfeld erzeugt, wobei letzteres durch ein gegenläufiges oder gleichgerichtetes Magnetfeld, welches in einem Steuerspulenkern (37) durch eine Magnetfeldsteuerungsspule (38) induziert wird, abgeschwächt beziehungsweise verstärkt werden kann.

8. Zündvorkammer mit Ventil (1) gemäß Anspruch 1, **dadurch gekennzeichnet, dass** der Hauptventilkörper (8) und/oder der Ausrichtungszapfen (15) durch eine öffnend wirkende Magnetfeldquelle (44) zum kammerseitigen Ventilanschlag (14) hingezogen werden.

9. Zündvorkammer mit Ventil (1) gemäß Anspruch 2, **dadurch gekennzeichnet, dass** der Ausrichtungszapfen (15) eine Abfederungsschulter (46) aufweist, die mit einer Abfederungssenke (47) zusammenwirkt, die eingangsseitig der axialen Führungsöffnung (17) vorgesehen ist, wobei die Senke (47) in die Ventilabfederungskammer (18) einmündet.

10. Zündvorkammer mit Ventil (1) gemäß Anspruch 9, **dadurch gekennzeichnet, dass** die Abfederungssenke (47) durch mindestens eine Druckablassleitung (48) auf direkte oder indirekte Weise mit der Brennkammer (3) verbunden ist.

11. Zündvorkammer mit Ventil (1) gemäß Anspruch 1, **dadurch gekennzeichnet, dass** die Schichtbildungsleitung (7) eine nicht-magnetische angeformte Hülse (26) umfasst, auf welcher der Leitungsabsperrsitz (11) angeordnet ist.

## Claims

1. Valve ignition prechamber (1) configured to be arranged in an internal combustion engine cylinder head (2) which caps a combustion chamber (3), said prechamber (1) comprising a lamination cavity (4) into which open ignition means (5) and at least one lamination injector (6), said cavity (4) being configured to be connected to the combustion chamber (3) by a lamination duct (7) which houses an oriented valve (50) in order to be able to form with the latter a torch ignition prechamber (9) which connects the lamination cavity (6) to the combustion chamber (5) via at least one gas ejection orifice (16) wherein the oriented valve (50) comprises
• A valve main body (8) housed with low clearance in the lamination duct (7);
• An axial closing face (10) arranged on the valve main body (8) and which can rest in whole or in part on a duct shutter seat (11) that the lamination duct (7) has in order to close said duct (7) and to isolate the lamination cavity (4) from the combustion chamber (5);
• At least one peripheral centring surface (12) arranged at the periphery of the valve main body (8), said surface (12) being able to come into contact with the inner wall of the lamination duct (7) to centre said body (8) in said duct (7);
• An axial opening face (13) that is arranged on the valve main body (8) opposite the axial closing face (10) and that, when the axial closing face (10) does not rest on the duct shutter seat (11), can rest on a chamber-side valve stop (14) arranged in the lamination duct (7);
• And a valve damping chamber (48) formed by the lamination duct, the axial opening face and the chamber-side valve stop and the volume of which is maximum when the axial closing face rests on the duct closing seat, and minimum when the axial opening face rests on the chamber-side valve stop;
**characterised in that** the oriented valve (50) comprises:
At least one orientation stud (15) which is fixedly attached to the valve main body (8) and which emerges from the axial opening face (13)
At least one axial guide port (17) that is arranged in or near the chamber-side valve stop (14) and in which the orientation stud (15) with low radial clearance is housed, said stud (15) being able to slide longitudinally in said hole (17) without ever fully exiting therefrom.

2. Valve ignition prechamber (1) according to Claim 1, **characterised in that** the axial guide port (17) passes right through the lamination duct (7) so as to connect the valve damping chamber (18) and the combustion chamber (3), so that a gas (19) can flow between said chambers (18, 3) via the small radial clearance left between the orientation stud (15) and the axial guide orifice (17).

3. Valve ignition prechamber (1) according to claim 1, **characterized in that** at least one gas throttling port (20) connects the valve damping chamber (18) and the combustion chamber (3) so that a gas (19) can flow between said chambers (18, 3) via said port (20).

4. Valve ignition prechamber (1) according to claim 1, **characterised in that** the centring peripheral surface (12) has a conical profile (21).

5. Valve ignition prechamber (1) according to claim 1, **characterised in that** the gas ejection orifice (16) is connected to the torch ignition prechamber (9) through at least one gas ejection slot (22) arranged in the lamination duct (7) and in the vicinity of the duct closing seat (11).

6. Valve ignition prechamber (1) according to claim 1, **characterised in that** the valve main body (8) and/or the orientation stud (15) is attracted towards the lamination cavity (4) by a closing magnetic field source (23).

7. Valve ignition prechamber (1) according to claim 6, **characterised in that** the closing magnetic field source (23) is constituted by at least one closing permanent magnet (24) which produces a magnetic field, the latter being able to be either countered or amplified by a respectively opposite or matching magnetic field induced in a control coil core (37) by a magnetic field control coil (38).

8. Valve ignition prechamber (1) according to claim 1, **characterised in that** the valve main body (8) and/or the orientation stud (15) is attracted towards the chamber-side valve stop (14) by an opening magnetic field source (44).

9. Valve ignition prechamber (1) according to claim 2, **characterised in that** the orientation stud 15 comprises a damping shoulder 46 which engages with a damping counterbore 47 arranged at the inlet of the axial guide orifice 17, said counterbore 47 opening into the valve damping chamber 18.

10. Valve ignition prechamber (1) according to claim 9, **characterised in that** the damping counterbore (47) is directly or indirectly connected to the combustion chamber (3) by at least one depressurising duct (48).

11. Valve ignition prechamber (1) according to claim 11, **characterised in that** the gas ejection duct (7) comprises a non-magnetic insert sleeve (26) on which the duct closing seat (11) is arranged.
